# EUROPÄISCHE PATENTSCHRIFT

(11) **EP 4 455 029 B1**
(45) Veröffentlichungstag und Bekanntmachung des Hinweises auf die Patenterteilung: **01.10.2025**
(21) Anmeldenummer: 24168909.0
(22) Anmeldetag: 08.04.2024
(51) Int. Cl.: B65B 9/04, B65B 11/52, B65B 59/04, B29C 51/30

(54) **ARBEITSSTATION FÜR EINE TIEFZIEHVERPACKUNGSMASCHINE UND TIEFZIEHVERPACKUNGSMASCHINE UMFASSEND EINE ARBEITSSTATION**
WORK STATION FOR A DEEP DRAW PACKAGING MACHINE AND DEEP DRAW PACKAGING MACHINE COMPRISING A WORK STATION
POSTE DE TRAVAIL POUR UNE MACHINE D'EMBALLAGE PAR EMBOUTISSAGE PROFOND ET MACHINE D'EMBALLAGE PAR EMBOUTISSAGE COMPRENANT UN POSTE DE TRAVAIL

(30) Priorität: 28.04.2023 DE 102023111016
(43) Veröffentlichungstag der Anmeldung: 30.10.2024
(73) Patentinhaber: MULTIVAC Sepp Haggenmüller SE & Co. KG, 87787 Wolfertschwenden (DE)
(72) Erfinder: MATHEIS, Marco, 87435 Kempten (DE); PATZ, Dominik, 87435 Kempten (DE); ZETTLER, Christoph, 88459 Tannheim (DE)
(74) Vertreter: Grünecker Patent- und Rechtsanwälte PartG mbB

(56) Entgegenhaltungen:
- EP-A1- 2 384 980
- EP-A1- 2 522 580
- DE-A1- 102017 107 243
- DE-A1- 2 323 425

## Beschreibung

Die vorliegende Erfindung betrifft eine Arbeitsstation für eine Tiefziehverpackungsmaschine und eine Tiefziehverpackungsmaschine umfassend eine Arbeitsstation.

Tiefziehverpackungsmaschinen sind in der Regel mit einer Formstation und einer Siegelstation vorgesehen, die jeweils formatabhängige wechselbare Werkzeugunterteile umfassen. Die Werkzeugunterteile bzw. eine Formplatte oder eine Siegelplatte wiegen bis zu 250 kg und deren Entfernung aus den Tiefziehverpackungsmaschinen kann problematisch sein, insbesondere wegen des hohen Gewichts.

DE 10 2017 107 243 A1 offenbart eine Verpackungsmaschine mit neigbarer Werkzeugschublade. In der DE 10 2017 107 243 A1 ist für einen Werkzeugwechselvorgang ein Kippmechanismus vorgesehen, der dazu konfiguriert ist, das Werkzeugunterteil aus seiner Betriebsposition in eine Kipplage zu bringen. Der Kippmechanismus umfasst eine Kippeinheit, eine Schwenkeinheit sowie eine darauf schwenkbar gekoppelte Grundplatte. Auf der Grundplatte ist das Werkzeugunterteil lösbar angeordnet. In der Kipplage ist die Grundplatte gemeinsam mit dem Werkzeugunterteil relativ zu einer horizontalen Bezugsebene geneigt angeordnet. Das Werkzeugunterteil wird von der Grundplatte des Kippmechanismus herab auf eine Schieneneinrichtung gezogen. Die Schieneneinrichtung ist seitlich lösbar am Maschinengestell der Verpackungsmaschine in einer Aufnahme befestigt. Nachteilig ist es hier, dass der Kippmechanismus viele Bauteile hat und dementsprechend dessen Ausbau komplex und kostenaufwendig ist. Des Weiteren ist die Schieneneinrichtung getrennt von dem Kippmechanismus an der Verpackungsmaschine angebracht und die Schieneneinrichtung ragt in ihrer gekippten Position aus der Verpackungsmaschine heraus, was viel Platz in Anspruch in der Verpackungsanlage für die Wartungsarbeit und den Wechselvorgang des Werkzeugunterteils nimmt.

Zudem können Werkzeugunterteile im eingebauten Zustand in Tiefziehverpackungsmaschinen auf einer Dichtung bzw. einer Rundschnur aufliegen. Wenn das Werkzeugunterteil auf einer Dichtung aufliegt, ist die Reibung zwischen dem Werkzeugunterteil und der Dichtung mitunter so groß, dass das Werkzeugunterteil nicht seitlich verschoben werden kann, um es aus der Tiefziehverpackungsmaschine herauszunehmen. Hier besteht auch die Gefahr, dass die Dichtung zerrissen wird, wenn das Werkzeugunterteil nicht nach oben bewegt wird, bevor es seitlich verschoben wird. Demzufolge muss in einer Arbeitsstation, in der das Werkzeugunterteil auf einer Dichtung aufliegt oder von einer Dichtung umgeben ist, das Werkzeugunterteil angehoben werden, um das Werkzeugunterteil von der Dichtung abzulösen bzw. von der Dichtung abzuheben. Anhebevorrichtungen mit Pneumatikzylindern sind bekannt aus dem Stand der Technik um das Werkzeugunterteil anzuheben, bevor es seitlich aus der Arbeitsstation herausgenommen wird. Solche Anhebevorrichtungen umfassen komplexe Komponenten und erfordern Steuerungsgeräte für den Betrieb. Damit sind solche Anhebevorrichtungen kosten- und bauaufwendig.

Folglich ist die Aufgabe der Erfindung, zumindest einige der oben benannten Nachteile zu beheben. Diese Aufgabe wird jeweils durch eine Arbeitsstation für eine Tiefziehverpackungsmaschine gemäß Anspruch 1 oder durch eine Tiefziehverpackungsmaschine umfassend eine Arbeitsstation gemäß Anspruch 15 gelöst.

Die Erfindung betrifft eine Arbeitsstation für eine Tiefziehverpackungsmaschine, umfassend ein Werkzeugoberteil, ein in einer Wechselrichtung aus der Arbeitsstation herausnehmbares Werkzeugunterteil, eine Wechselvorrichtung zum Kippen des Werkzeugunterteils von einer Betriebsposition zu einer Wechselposition, wobei das Werkzeugunterteil auf einem ersten Tragelement der Wechselvorrichtung gelagert ist, wobei das erste Tragelement an der Arbeitsstation um eine erste Kippachse drehbar gelagert ist, wobei die Wechselvorrichtung einen ersten Nocken aufweist, und wobei die Wechselvorrichtung dazu konfiguriert ist, durch ein Drehen des ersten Nockens um eine von der ersten Kippachse separat angeordnete erste Drehachse das erste Tragelement um die erste Kippachse zu kippen. Das Werkzeugunterteil kann in der Betriebsposition auf einer Dichtung liegen. Die Wechselrichtung kann senkrecht zu einer Transportrichtung einer in der Arbeitsstation zu bearbeitenden Folienbahn sein. Die Wechselrichtung kann die Richtung zu einer Bedienerseite sein. In der Wechselposition kann das Werkzeugunterteil relativ zu einer horizontalen Bezugsebene geneigt angeordnet sein. Der erste Nocken kann ein Exzenter sein. Der Nocken kann auf einer Nockenwelle angebracht sein. Durch das Drehen des ersten Nockens um die Drehachse kann das Werkzeugunterteil von der Betriebsposition zu der Wechselposition gekippt werden.

Die Erfindung ermöglicht ein einfaches Wechseln des Werkzeugunterteils, denn in der gekippten Position wird das Werkzeugunterteil von der unterhalb des Werkzeugteils angeordneten Dichtung weggehalten.

Des Weiteren ermöglicht die Erfindung, die Wechselvorrichtung einfach und kostengünstig herzustellen, da die Wechselvorrichtung zum Kippen des Werkzeugunterteils mit einem einfachen Nocken-Mechanismus aufgebaut ist.

Des Weiteren ermöglicht die Erfindung, das Werkzeugunterteil in der Arbeitsstation auf einem Gestellelement, bevorzugt auf einer Grundplatte oder auf einem Joch der Arbeitsstation zu lagern und unabhängig von dem Gestellelement das Werkzeugunterteil von der Betriebsposition zu der Wechselposition zu kippen. Dadurch wird in der Verpackungsanlage für den Wechselvorgang des Werkzeugunterteils Platz gespart.

Überdies ermöglicht die Erfindung einen besseren Schutz für die Dichtungen in der Arbeitsstation, da durch das Kippen des Werkzeugunterteils separat von dem Gestellelement verhindert wird, dass das Werkzeugunterteil zu stark auf der Dichtung reibt. Das wäre nicht möglich, wenn das Werkzeugunterteil zusammen mit dem Gestellelement gekippt wird, da die Dichtungen zwischen dem Werkzeugunterteil und dem Gestellelement liegen.

Ein weiterer Vorteil der Erfindung bietet sich, wenn die Wechselvorrichtung bzw. das Tragelement durch eine Zusammenwirkung des ersten Nockens mit dem ersten Tragelement in der Betriebsposition verriegelbar ist. Dadurch fällt ein Bedarf auf eine zusätzliche Verriegelungseinheit aus, um die Wechselvorrichtung in der Betriebsposition zu sichern.

Vorteilhafterweise ist durch eine Drehbewegung des ersten Nockens von einer ersten Rastposition zu einer zweiten Rastposition das erste Tragelement von einer ersten Stellung in eine zweite Stellung kippbar. Wenn der erste Nocken sich in der zweiten Rastposition befindet, ist das erste Tragelement nach oben gekippt. Dadurch kann das Werkzeugunterteil auch nach oben gekippt bzw. in die Wechselposition bewegt werden. Das Werkzeugunterteil kann in der Wechselposition von der Dichtung weggehalten werden. Wenn das Werkzeugunterteil von der Dichtung weggehalten ist, kann das Werkzeugunterteil leicht aus der Arbeitsstation herausgenommen werden, da das Werkzeugunterteil nicht mehr auf der Dichtung reibt.

Vorteilhafterweise kann das erste Tragelement lediglich mit einer Kippbewegung von der ersten Stellung in die zweite Stellung bringbar sein, bzw. das Werkzeugunterteil von der Betriebsposition in die Wechselposition bringbar sein, insbesondere ohne eine vertikale Aufwärtsbewegung. Dadurch kann die Wechselvorrichtung stabiler und mit vergleichsweise wenigen Bauteilen aufgebaut werden.

Vorteilhafterweise kann die erste Kippachse an der Arbeitsstation, bevorzugt zumindest während der gesamten Drehbewegung des ersten Nockens zwischen der ersten Rastposition und der zweiten Rastposition, ortsfest sein. Dadurch kann der Kippmechanismus der Wechselvorrichtung stabiler und einfach aufgebaut werden. Die Kippachse kann in einem oberhalb des Gestellelements angeordneten Schwenklager gelagert sein, wobei das Gestellelement oberhalb eines das Gestellelement tragenden Basiselements eines Hubwerks der Arbeitsstation angeordnet ist.

Vorteilhafterweise kann das erste Tragelement in Zusammenwirkung mit dem ersten Nocken in der ersten Stellung verriegelbar sein, wenn der erste Nocken sich in der ersten Rastposition befindet, und/oder es kann das erste Tragelement in Zusammenwirkung mit dem ersten Nocken in der zweiten Stellung verriegelbar sein, wenn der erste Nocken sich in der zweiten Rastposition befindet. Durch eine dieser Maßnahmen kann die Wechselvorrichtung sowohl als eine Kippeinheit zum Kippen und einfaches Wechseln des Werkzeugunterteils als auch als Verriegelungseinheit zum Verriegeln des das Werkzeugunterteil tragende Tragelement dienen. Ein Verriegeln des ersten Tragelements in der zweiten Stellung kann das Wechseln des Werkzeugunterteils durch Stabilisieren des Tragelements in seiner zweiten Stellung vereinfachen.

In einer Ausführungsform kann das erste Tragelement einen ersten Hauptkörper und ein sich von dem ersten Hauptkörper des ersten Tragelements erstreckendes erstes hakenförmiges Ende aufweisen. Das Werkzeugunterteil kann auf dem Hauptkörper bewegbar bzw. gleitbar sein, insbesondere, wenn das erste Tragelement sich in der ersten Stellung und das Werkzeugunterteil sich in der Wechselposition befindet. Durch das erste hakenförmige Ende des ersten Tragelements können der erste Nocken und das erste Tragelement sowohl als eine Verriegelungseinheit als auch eine Kippeinheit fungieren.

In der ersten Stellung kann ein erster Abschnitt des ersten Nockens in einem ersten Aufnahmebereich des ersten hakenförmigen Endes des ersten Tragelements aufgenommen sein. Dadurch kann der erste Nocken und das erste Tragelement als eine Verriegelungseinheit zum Verriegeln des ersten Tragelements in der ersten Stellung fungieren.

In der zweiten Stellung kann ein zweiter Abschnitt des ersten Nockens in einer ersten Vertiefung des ersten Hauptkörpers des ersten Tragelements aufgenommen sein. Dadurch kann der erste Nocken und das erste Tragelement als eine Verriegelungseinheit zum Verriegeln des ersten Tragelements in der zweiten Stellung fungieren.

Vorteilhafterweise kann der erste Hauptkörper einen ersten Führungsteil aufweisen, wobei das Werkzeugunterteil in dem ersten Führungsteil und/oder auf dem ersten Führungsteil gleitbar oder rollbar ist. Das Werkzeugunterteil kann auf dem Werkzeugunterteil seitlich angeordnete Rollen aufweisen. Durch die Rollen kann das Werkzeugunterteil auf dem ersten Führungsteil gleiten/rollen. Der Führungsteil kann in Form einer Schiene, bevorzugt in Form einer Laufschiene ausgebildet sein.

Der erste Führungsteil und der erste Nocken können in der Transportrichtung voneinander beabstandet sein. Dadurch kann der erste Nocken so angeordnet sein, dass er das Werkzeugunterteil in der Wechselrichtung nicht sperrt, wenn das Werkzeugunterteil sich in der Wechselposition befindet.

Zweckmäßig kann die Wechselvorrichtung zwei Tragelemente bzw. das erste Tragelement und ein zweites Tragelement aufweisen. Die Tragelemente können jeweils gleich ausgebildet sein. Die Tragelemente können an gegenüberliegenden Seiten des Werkzeugunterteils symmetrisch zueinander angeordnet sein. Durch das Überführen der Tragelemente von deren erster Stellung in deren zweite Stellung kann das Werkzeugunterteil von der Betriebsposition zu der Wechselposition bewegt bzw. gekippt werden. Das Werkzeugunterteil kann auf beiden Tragelementen gleitbar und/oder rollbar sein.

Zweckmäßig kann die Wechselvorrichtung zwei Nocken aufweisen. Die Nocken können jeweils gleich ausgebildet sein. Die Nocken können an gegenüberliegenden Seiten des Werkzeugunterteils symmetrisch zueinander angeordnet sein. Durch ein Überführen der Nocken von deren erster Rastposition in deren zweite Rastposition können die Tragelemente von deren erster Stellung zu deren zweiten Stellung bewegt bzw. gekippt werden. Die Wechselvorrichtung kann mehrere entlang einer Länge der Seitenwand verteilte Nockenpaare aufweisen.

Die zwei Nocken können über eine Welle miteinander, vorzugsweise mittels eines Hebels, gemeinsam betätigbar gekoppelt sein. Durch ein Drehen der Welle mittels des Hebels können beide Nocken von deren erster Rastposition in deren zweite Rastposition gebracht werden.

In einer Ausführungsform kann auf der Welle ein Vorsprung angeordnet sein. Der Vorsprung kann in einer Ausnehmung des Werkzeugunterteils aufgenommen sein, um das Werkzeugunterteil beim Drehen der Welle quer zu der Wechselrichtung, bevorzugt in der Transportrichtung oder in Richtung der Wellenachse, zu schieben. Durch das Verschieben in Richtung der Wellenachse kann das Werkzeugunterteil hin oder weg von einem neben dem Werkzeugunterteil angeordneten Kammerteil, bevorzugt von einer seitlich neben dem Werkzeugunterteil angeordneten Dichtung bewegt werden. Das Kammerteil kann eine Vorheizplatte aufweisen. Das Kammerteil kann eine Vorheizplatte sein. Das Werkzeugunterteil kann in der Betriebsposition zumindest einen Teil einer Wandung einer luftdichten Kammer bilden, in welcher einer Heizeinrichtung angeordnet ist. Die Dichtung kann einen Spalt zwischen dem Werkzeugunterteil und dem Kammerteil abdichten, wenn das Werkzeugunterteil in der Betriebsposition vorliegt. Das Bewegen des Werkzeugunterteils zwischen einer ersten Bereitstellungsposition und einer zweiten Bereitstellungsposition kann das Werkzeugunterteil quer zu der Wechselrichtung oder in Richtung der Wellenachse verschieben.

Die Dichtung kann in Richtung der Wellenachse neben dem Werkzeugunterteil angeordnet sein. Dadurch kann das Werkzeugunterteil leichter aus der Arbeitsstation entfernt werden, ohne jegliche oder zumindest ohne eine übermäßige Reibung mit der neben dem Werkzeugunterteil angeordneten Dichtung. Die Ausnehmung kann zwischen gegenüberliegenden Seiten des Werkzeugunterteils, bevorzugt mittig in dem Werkzeugunterteil, ausgebildet sein. Die Ausnehmung kann in Form einer Kulissenbahn ausgebildet sein. Der Vorsprung kann in Form eines Stifts ausgebildet sein.

In einer Ausführungsform kann das Werkzeugunterteil eine Aussparung zum Aufnehmen einer Sperreinheit eines Gestellelements aufweisen, sodass eine Bewegung des Werkzeugunterteils entlang des Tragelements und/oder des Gestellelements verhindert wird, wenn das Werkzeugunterteil sich in der Betriebsposition befindet. Die Sperreinheit kann in Form eines Kegels ausgebildet sein. Dadurch kann das Werkzeugunterteil in der Betriebsposition gesichert werden, ohne eine zusätzliche Verriegelung. Wenn das Werkzeugunterteil von der Betriebsposition in die Wechselposition gekippt wird, kann das Werkzeugunterteil von der Sperreinheit weggehalten werden. Die Aussparung kann zwischen gegenüberliegenden Seiten des Werkzeugunterteils, bevorzugt mittig in dem Werkzeugunterteil, ausgebildet sein.

Die Erfindung betrifft weiterhin eine Tiefziehverpackungsmaschine umfassend die Arbeitsstation gemäß einer der oben beschriebenen Ausführungsformen. Die Tiefziehverpackungsmaschine kann eine Formstation, eine Siegelstation bzw. eine Evakuier- und Versiegelungsstation, und ggf. eine Schneidereinrichtung aufweisen, die in dieser Reihenfolge in einer Produktionsrichtung an einem Maschinenrahmen angeordnet sind. Die Arbeitsstation kann die Formstation und/oder die Siegelstation sein. Die Arbeitsstation kann eine Hubeinrichtung zum Bewegen des Werkzeugunterteils relativ zu dem Werkzeugoberteil aufweisen. In der Tiefziehverpackungsmaschine kann eine Folienbahn von einer Eingangsseite in die Maschine eingeführt werden. In der Formstation können aus bzw. in der Folienbahn Behälter geformt werden. Die Behälter können nach einem Befüllen von Produkten in einer Füllstation in der Siegelstation mit einer Oberfolie versiegelt werden und schließlich mittels der Schneideinrichtung voneinander getrennt werden. Das Werkzeugunterteil bzw. Formwerkzeugunterteil kann unterhalb der Folienbahn vorgesehen sein. Das Formwerkzeugunterteil kann zwischen einer angehobenen Position und einer abgesenkten Position bewegbar sein. In seiner angehobenen Position kann das Formwerkzeugunterteil auf die Folienbahn wirken, um die Folienbahn nach unten zu verformen, um einen Produkthohlraum in den Produktträgern oder Mulden zu bilden. Das Formwerkzeugunterteil kann in seiner abgesenkten Position von der Folienbahn wegbewegt werden, um eine Vorwärtsbewegung der Folienbahn mit dem darin gebildeten Produkthohlraum zu ermöglichen. In seiner angehobenen Position können die oberen Enden der Seitenwände des Formwerkzeugunterteils in Kontakt mit der Unterseite der Folienbahn kommen. Im Inneren des Formwerkzeugunterteils kann durch eine Vakuumleitung und eine Reihe von Luftkanälen, die im Boden des Werkzeugunterteils ausgebildet sind, negativer Luftdruck erzeugt werden. Dadurch kann die Folienbahn nach unten in das Innere des Werkzeugunterteils verformt werden. Die Siegelstation kann eine verschließbare Kammer aufweisen, in der die Atmosphäre in den Mulden vor dem Versiegeln zum Beispiel durch Evakuieren oder Gasspülen mit einem Austauschgas oder mit einem Gasgemisch ersetzt werden kann. Die Hubeinrichtung kann eine formatabhängige Siegelbrille mit einer Bodenplatte auf und ab bewegen. Die Siegelstation kann oben ein Siegelwerkzeugoberteil aufweisen, in dem eine Siegelplatte angeordnet ist. Eine Gruppe von Mulden, die in der Formstation während eines Arbeitstaktes in die Folienbahn geformt werden und dann intermittierend in Produktionsrichtung transportiert werden, können als ein Format definiert werden. Ein Format kann mehrere Verpackungen bzw. Mulden sowohl in Produktionsrichtung der Tiefziehverpackungsmaschine bzw. Folienlaufrichtung wie auch quer dazu aufweisen, beispielsweise 4 x 4 Mulden. Bei einem Formatwechsel von 4 x 4 auf beispielsweise 3 x 3 Mulden können sowohl Teile der Formstation bzw. Formwerkzeugunterteils, wie auch Teile der Siegelstation bzw. Siegelwerkzeugunterteils (die Siegelbrille oder eine Siegelplatte) gewechselt werden.

Die folgenden Figuren zeigen:
- Figur 1: eine schematische Seitenansicht einer Tiefziehverpackungsmaschine,
- Figur 2: eine schematische Seitenansicht einer Arbeitsstation der Tiefziehverpackungsmaschine,
- Figur 3: eine schematische Seitenansicht der Arbeitsstation,
- Figur 4: eine schematische Seitenansicht einer Ausführungsform der Arbeitsstation der Tiefziehverpackungsmaschine mit einer Wechselvorrichtung,
- Figur 5: eine schematische Seitenansicht der Arbeitsstation der Tiefziehverpackungsmaschine mit der Wechselvorrichtung,
- Figur 6: eine schematische Seitenansicht der Arbeitsstation zeigend einer ersten und zweiten Stellung eines Tragelements der Wechselvorrichtung,
- Figur 7: eine schematische Seitenansicht der Arbeitsstation zeigend einen Nocken der Wechselvorrichtung in unterschiedlichen Stellungen während einer Drehbewegung,
- Figur 8: eine schematische Seitenansicht einer Ausführungsform der Arbeitsstation,
- Figur 9: eine schematische Draufsicht einer Ausführungsform der Arbeitsstation,
- Figur 10: eine schematische Seitenansicht einer Ausführungsform der Arbeitsstation,
- Figur 11: eine schematische Draufsicht der in der Figur 10 gezeigten Ausführungsform der Arbeitsstation in einer ersten Arbeitsstellung,
- Figur 12: eine schematische Draufsicht der in der Figur 10 gezeigten Ausführungsform der Arbeitsstation in einer zweiten Arbeitsstellung,
- Figur 13: eine schematische Seitenansicht einer Ausführungsform der Arbeitsstation.

Gleiche Komponenten sind in den Figuren durchgängig mit gleichen oder einander entsprechenden Bezugszeichen versehen.

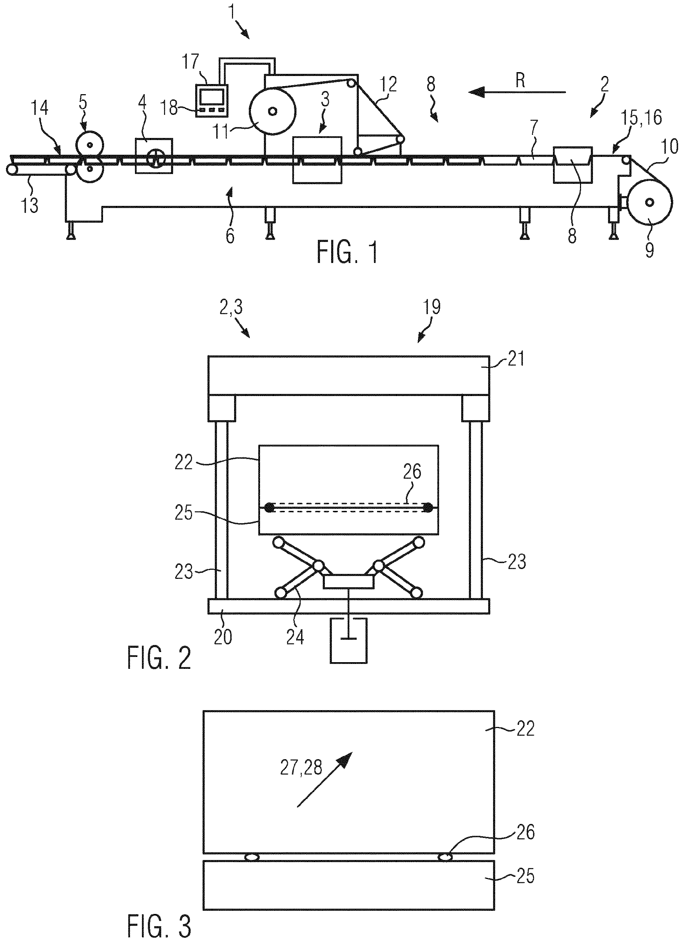

Figur 1 zeigt eine Tiefziehverpackungsmaschine 1. Die Tiefziehverpackungsmaschine 1 weist eine Formstation 2, eine Siegelstation 3, eine Querschneideeinrichtung 4 und eine Längsschneideeinrichtung 5 auf, die in dieser Reihenfolge in einer Produktionsrichtung R an einem Maschinenrahmen 6 angeordnet sind. Zwischen der Formstation 2 und der Siegelstation 3 ist eine Einlegestation 7 vorgesehen. In der Einlegestation 7 werden beispielsweise Lebensmittelprodukte in von der Formstation 2 geformte Produktträger 8 eingelegt.

Eingangsseitig befindet sich an dem Maschinenrahmen 6 eine Zufuhrrolle 9, von der eine Folienbahn 10 abgezogen wird. Im Bereich der Siegelstation 3 ist ein Materialspeicher 11 vorgesehen, von dem eine Deckelfolie 12 abgezogen wird. Ausgangsseitig ist an der Tiefziehverpackungsmaschine 1 eine Fördervorrichtung 13 vorgesehen, mit der fertige Verpackungen 14 mit vereinzelten Produktträgern 8 abtransportiert werden. Ferner weist die Tiefziehverpackungsmaschine 1 eine Vorschubeinrichtung 15 auf, die die Folienbahn 10 ergreift und diese pro Hauptarbeitstakt in der Produktionsrichtung R weitertransportiert. Die Vorschubeinrichtung 15 kann zum Beispiel durch beidseitig angeordnete Klammerketten 16 ausgeführt sein. An der Tiefziehverpackungsmaschine 2 ist eine Benutzerschnittstelle 17 in Form einer Anzeigeeinrichtung angeordnet. Die Benutzerschnittstelle 17 verfügt über Bedienelemente 18.

Figur 2 zeigt eine schematische Ansicht einer Arbeitsstation 19 der Tiefziehverpackungsmaschine 1. Die Arbeitsstation 19 kann die Formstation 2 oder die Siegelstation 3 sein. Die Arbeitsstation 19 weist einen Basisteil 20 auf. Die Arbeitsstation 19 weist ein mit dem Basisteil 20 verbundenes Werkzeugoberteil 21 auf. Die Arbeitsstation 19 weist ein relativ zu dem Werkzeugoberteil 21 bewegbares Werkzeugunterteil 22 auf. Das Basisteil 20 und das Werkzeugoberteil 21 sind über Stangen 23 bzw. Zugstangen oder Führungsstangen miteinander verbunden. Eine Hubeinrichtung 24 ist zum Bewegen des Werkzeugunterteils 22 und eines dem Werkzeugunterteil 22 tragenden Gestellelements 25 (das Gestellelement 25 kann eine Platte sein) relativ zu dem Werkzeugoberteil 21 vorgesehen. Unter dem Werkzeugunterteil 22 ist eine Dichtung 26 vorgesehen.

Figur 3 zeigt eine schematische Ansicht des Werkzeugunterteils 22 der Arbeitsstation 19 der Tiefziehverpackungsmaschine 1. Das Werkzeugunterteil 22 zum Formen von Folienbahn 10 in Produktträgern 8 oder zum Siegeln der Folienbahn 10 mit der Deckelfolie muss für einen Formatwechsel der Verpackungen 14 gewechselt werden. Für den Formatwechsel muss das Werkzeugunterteil 22 aus der Arbeitsstation herausgenommen werden. Nun sitzt das Werkzeugunterteil 22 auf einer Dichtung 22. Um eine Reibung zwischen dem Werkzeugunterteil 22 und der Dichtung 26 zu verhindern, muss das Werkzeugunterteil 22 von der Dichtung 26 mit einer Kippbewegung 27 in eine Wechselrichtung 28 abgehoben werden. Dann kann das Werkzeugunterteil 22 in der Wechselrichtung 28 aus der Arbeitsstation 19 herausnehmbar sein.

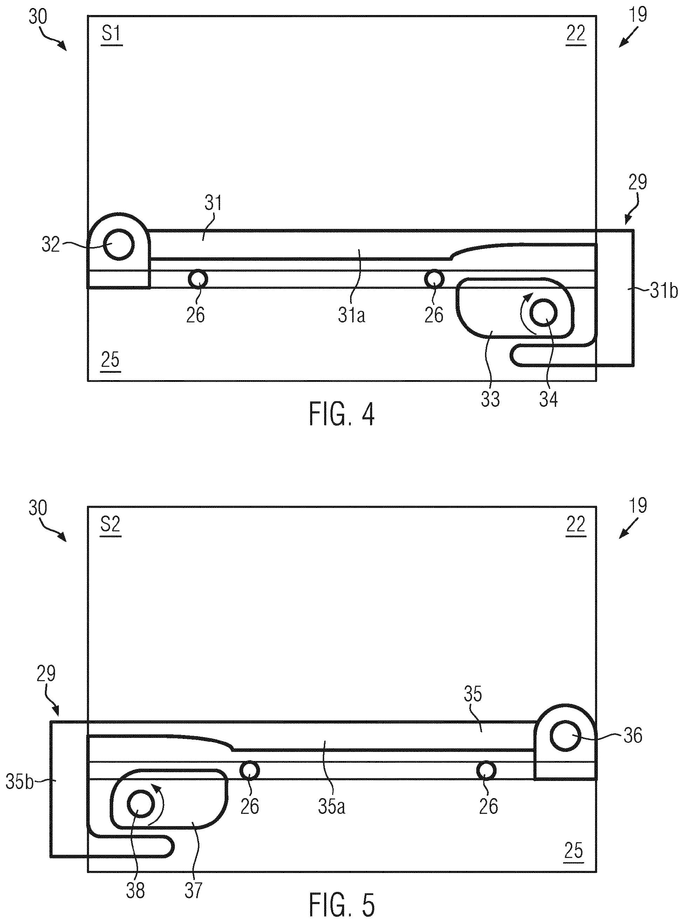

Figur 4 zeigt eine schematische Ansicht einer Ausführungsform der Arbeitsstation 19 mit einer Wechselvorrichtung 29. Figur 4 zeigt eine erste Seite der Arbeitsstation bzw. eine erste Seite S1 des Werkzeugunterteils 22.

Die Wechselvorrichtung 29 kann zum Anheben des Werkzeugunterteils 22 von der Dichtung 26 für ein einfaches Herausnehmen desselben aus der Arbeitsstation 19 dienen. Die Wechselvorrichtung 29 kann auch zum Verriegeln der Wechselvorrichtung 29 in einer Betriebsposition 30 dienen. In der in Figur 4 gezeigten Stellung ist das Werkzeugunterteil 22 in der Betriebsposition 30.

Die Wechselvorrichtung 29 umfasst ein erstes Tragelement 31. Das erste Tragelement 31 weist einen ersten Hauptkörper 31a und ein sich von dem ersten Hauptkörper 31a des ersten Tragelements 31 erstreckendes erstes hakenförmiges Ende 31b auf. Das erste Tragelement 31 ist an der Arbeitsstation 19 um eine erste Kippachse 32 drehbar gelagert. Die Wechselvorrichtung 29 weist einen ersten Nocken 33 auf. Die Wechselvorrichtung 29 ist dazu konfiguriert, durch ein Drehen des ersten Nockens 33 um eine von der ersten Kippachse 32 separat angeordnete erste Drehachse 34 das erste Tragelement 31 um die erste Kippachse 32 zu kippen.

Figur 5 zeigt eine schematische Ansicht einer anderen Seite der Arbeitsstation 19 mit der Wechselvorrichtung 29. Figur 5 zeigt eine zweite Seite S2 des Werkzeugunterteils 22. Die zweite Seite S2 ist die gegenüberliegende Seite von Seite S1 des Werkzeugunterteils 22.

Die Wechselvorrichtung 29 umfasst ein zweites Tragelement 35. Das zweite Tragelement 35 weist einen zweiten Hauptkörper 35a und ein sich von dem zweiten Hauptkörper 35a des zweiten Tragelements 35 erstreckendes zweites hakenförmiges Ende 35b auf. Die ersten und die zweiten Tragelemente 31, 35 sind jeweils gleich ausgebildet. Die ersten und die zweiten Tragelemente 31, 35 sind an gegenüberliegenden Seiten S1, S2 des Werkzeugunterteils 22 symmetrisch zueinander angeordnet. Das Werkzeugunterteil 22 ist auf dem ersten Tragelement 31 und auf dem zweiten Tragelement 35 der Wechselvorrichtung 29 gelagert.

Das zweite Tragelement 35 ist an der Arbeitsstation 19 um eine zweite Kippachse 36 drehbar gelagert. Die Wechselvorrichtung 29 weist einen zweiten Nocken 37 auf. Die Wechselvorrichtung 29 ist dazu konfiguriert, durch ein Drehen des zweiten Nockens 37 um eine von der zweiten Kippachse 36 separat angeordnete zweite Drehachse 38 das zweite Tragelement 35 um die zweite Kippachse 36 zu kippen. Der erste und zweite Nocken 33, 37 sind jeweils gleich ausgebildet. Der erste und zweite Nocken 33, 37 sind an gegenüberliegenden Seiten S1, S2 des Werkzeugunterteils 22 symmetrisch zueinander angeordnet.

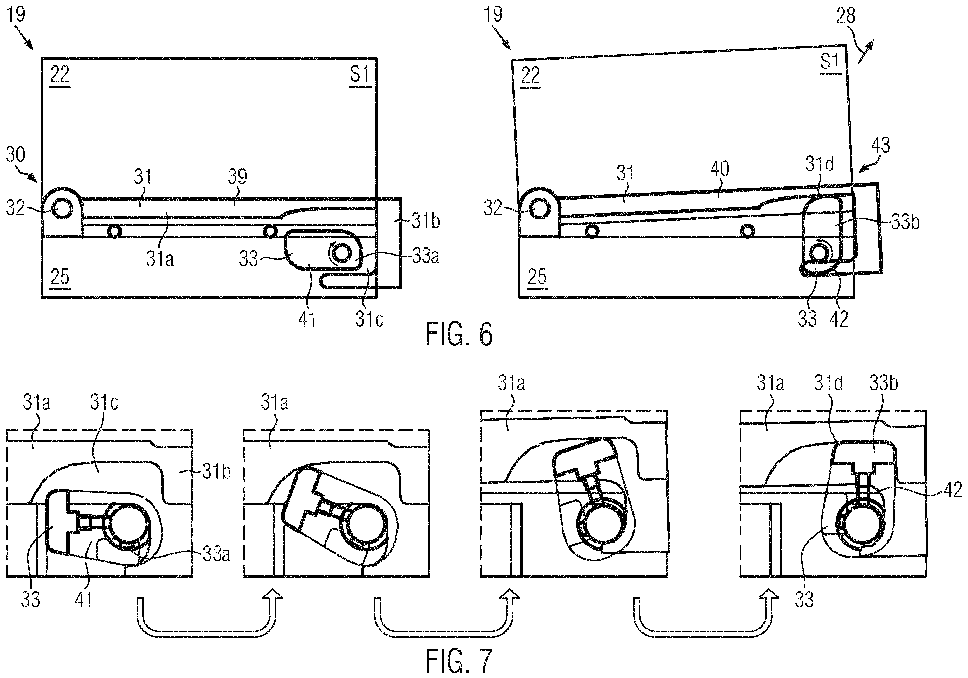

Figur 6 zeigt eine schematische Ansicht der Arbeitsstation 19 und des Werkzeugunterteils 22 von der ersten Seite S1, in dem die Arbeitsstation 19 in einer ersten Stellung 39 des ersten Tragelements 31 (Abbildung auf der linken Seite) und in einer zweiten Stellung 40 des ersten Tragelements 31 (Abbildung auf der rechten Seite) gezeigt ist. Gleiche Gestaltung und Funktionsprinzip, die in der Figur 6 dargestellt sind, gelten auch für eine erste und zweite Stellung des zweiten Tragelements 35.

Das Werkzeugunterteil 22 ist in der Betriebsposition 30, wenn das erste Tragelement 31 in der ersten Stellung 39 ist. In der ersten Stellung 39 ist ein erster Abschnitt 33a des ersten Nockens 33 in einem Aufnahmebereich 31c des ersten hakenförmigen Endes 31b des ersten Tragelements 31 aufgenommen. Wenn das erste Tragelement 31 in der ersten Stellung 39 ist, ist das erste Tragelement 31 durch den ersten Nocken 33 verriegelt. Dadurch ist das Werkzeugunterteil 22 in der Betriebsposition 30 verriegelt. Durch eine Drehbewegung des ersten Nockens 33 von einer ersten Rastposition 41 in eine zweite Rastposition 42 wird das erste Tragelement 31 von der ersten Stellung 39 in die zweite Stellung 40 gekippt. In der zweiten Stellung 40 ist ein zweiter Abschnitt 33b des ersten Nockens 33 in einer ersten Vertiefung 31d des ersten Hauptkörpers 31a des ersten Tragelements 31 aufgenommen. Dadurch wird das erste Tragelement 31 verriegelt, und das erste Tragelement 31 und das Werkzeugunterteil 22 von der Betriebsposition 30 in eine Wechselposition 43 gekippt.

Figur 7 zeigt eine schematische Ansicht der Arbeitsstation 19 mit dem ersten Nocken 33 der Wechselvorrichtung 29 in unterschiedlichen Stellungen während einer Drehbewegung von der ersten Rastposition 41 in die zweite Rastposition 42. Gleiche Gestaltung und Funktionsprinzip, die in der Figur 7 dargestellt sind, gelten auch für den zweiten Nocken 37 des zweiten Tragelements 35.

Beispielsweise ist in der ersten Stellung 39 ein erster Abschnitt 33a des ersten Nockens 33 in einem Aufnahmebereich 31c des ersten hakenförmigen Endes 31b des ersten Tragelements 31 aufgenommen. Durch eine Drehbewegung des ersten Nockens 33 und des zweiten Nockens 37 werden die jeweiligen Verriegelungen zwischen den Tragelementen 31, 35 und den Nocken 33, 37 gelöst. Wenn ein Totpunkt überschritten wird, werden die Nocken 33, 37 in deren jeweiligen zweiten Rastpositionen fixiert. In der zweiten Stellung 40 ist ein zweiter Abschnitt 33b des ersten Nockens 33 in einer ersten Vertiefung 31d des ersten Hauptkörpers 31a des ersten Tragelements 31 aufgenommen.

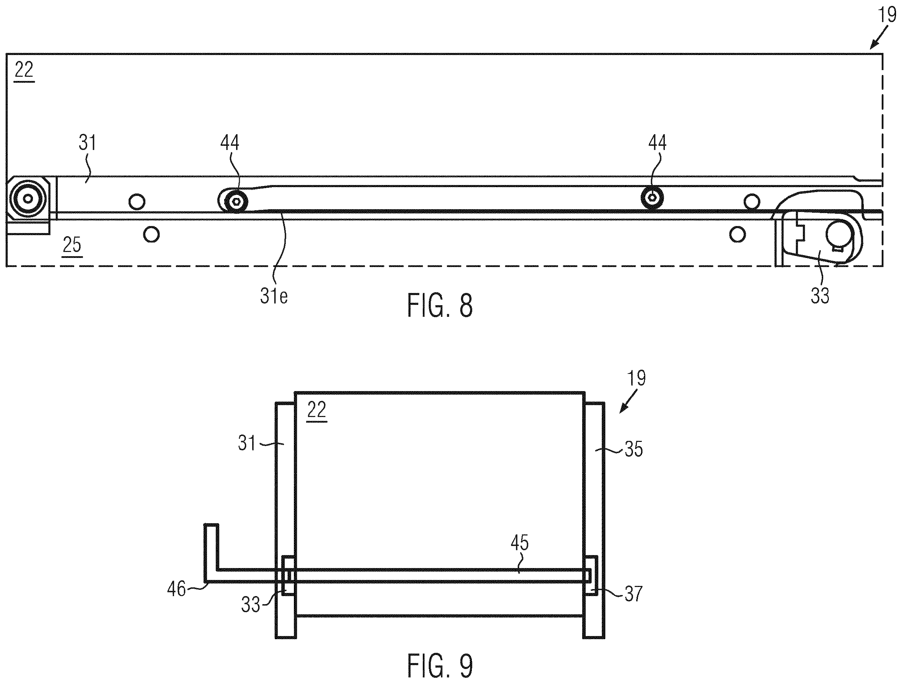

Figur 8 zeigt eine schematische Ansicht einer Ausführungsform der Arbeitsstation 19, wo das erste Tragelement 31 der Wechselvorrichtung 29 mit einem Führungsteil 31e vorgesehen ist. Gleiche Gestaltung und Funktionsprinzip, die in der Figur 8 dargestellt sind, gilt auch für das zweite Tragelement 35.

Um das Werkzeugunterteil 22 auf dem ersten Tragelement 31 zu gleiten oder zu rollen, weist der erste Hauptkörper 31a den ersten Führungsteil 31e in Form einer Laufschiene auf. In/auf dem Führungsteil 31e kann das Werkzeugunterteil 22 durch seine Rollen 44 gerollt werden. Dadurch kann das Werkzeugunterteil 22 leicht aus der Arbeitsstation 19 entfernt werden.

Figur 9 zeigt eine schematische Draufsicht einer Ausführungsform der Arbeitsstation 19. In dieser Ausführungsform sind die zwei Nocken 33, 37, bzw. der erste Nocken 33 und der zweite Nocken 37 über eine Welle 45 miteinander gekoppelt. Die Welle 45 ist an dem Gestellelement 25 angeordnet. Der erste Nocken 33 und der zweite Nocken 37 sind mittels eines Hebels 46 gemeinsam betätigbar. Durch eine Drehbewegung des Hebels 46 werden der erste Nocken 33 und der zweite Nocken 37 durch die Welle 45 gedreht und dadurch werden jeweils das erste Tragelement 31 und das zweite Tragelement 35 von deren ersten Stellung in die zweite Stellung gebracht bzw. nach oben gekippt. Somit wird das Werkzeugunterteil 22 von der Betriebsposition 30 in die Wechselposition 43 gebracht.

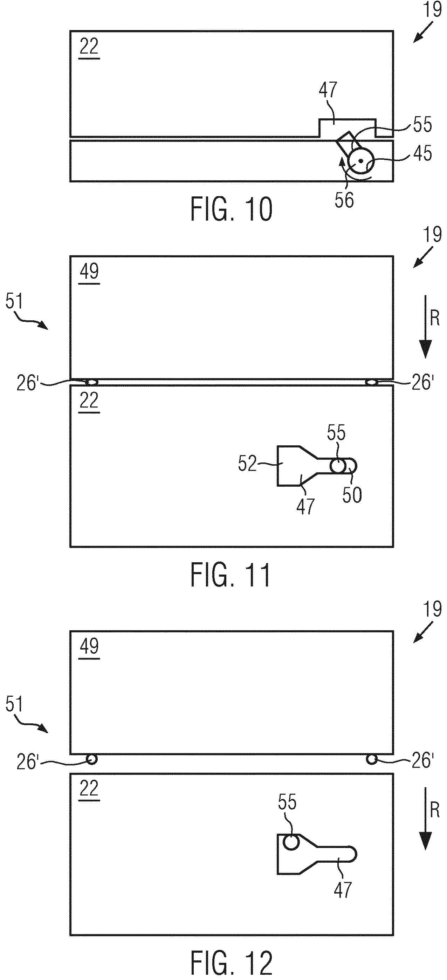

Figur 10 zeigt eine schematische Seitenansicht einer Ausführungsform der Arbeitsstation 19. In den Figuren 10-12 ist das erste Tragelement 31 nicht gezeigt.

In dieser Ausführungsform ist auf der Welle 45 ein Vorsprung 55 angeordnet. Der Vorsprung 55 ist in einer Ausnehmung 47 des Werkzeugunterteils 22 in Form einer Kulissenführung aufgenommen. Der Vorsprung 55 und die Ausnehmung 47 sind so angeordnet, dass das Werkzeugunterteil 22 beim Drehen der Welle 45 in Richtung der Wellenachse 56 bzw. quer zu der Wechselrichtung 28 verschiebbar ist.

Figur 11 zeigt eine schematische Draufsicht der in der Figur 10 gezeigten Ausführungsform der Arbeitsstation 19 in einer ersten Bereitstellungsposition 48. In der ersten Bereitstellungsposition 48 ist das Werkzeugunterteil 22 entlang der Produktionsrichtung R neben einem Kammerteil 49 der Arbeitsstation 19 bzw. stromabwärts des Kammerteils 49 angeordnet. Das Kammerteil 49 kann eine Vorheizplatte zum Heizen der Folienbahn 10 aufweisen. In der ersten Bereitstellungsposition 48 kann das Werkzeugunterteil 22 sich in der Betriebsposition befinden. Zwischen der Vorheizplatte 49 und dem Werkzeugunterteil 22 sind Dichtungen 26' vorgesehen. Der Vorsprung 55 ist in einem schmalen Bereich 50 der Ausnehmung 47 aufgenommen. Durch eine Drehbewegung der Welle 45 wird das Werkzeugunterteil 22 in Richtung der Wellenachse bzw. in Produktionsrichtung R verschoben.

Figur 12 zeigt eine schematische Draufsicht der in der Figur 10 gezeigten Ausführungsform der Arbeitsstation 19 in einer zweiten Bereitstellungsposition 51. In der zweiten Bereitstellungsposition 51 ist das Werkzeugunterteil 22 entlang der Produktionsrichtung R in Bezug auf die Vorheizplatte 49 versetzt angeordnet. Der Vorsprung 55 ist in einem breiten Bereich 52 der Ausnehmung 47 aufgenommen. In der zweiten Bereitstellungsposition 51 kann das Werkzeugunterteil 22 sich in der Wechselposition 43 befinden.

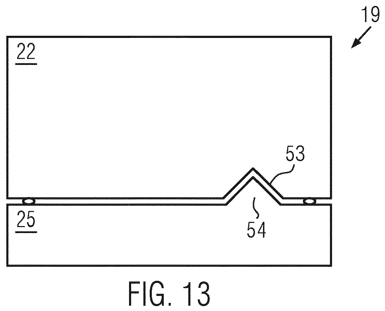

Figur 13 zeigt eine schematische Seitenansicht einer Ausführungsform der Arbeitsstation 19. In dieser Ausführungsform ist das Werkzeugunterteil 22 mit einer Aussparung 53 vorgesehen. Die Aussparung 53 nimmt eine Sperreinheit 54 des Gestellelements 25 auf, insbesondere wenn das Werkzeugunterteil 22 sich in der Betriebsposition 30 befindet. Dadurch wird eine Bewegung des Werkzeugunterteils 22 gegenüber dem ersten und/oder zweiten Tragelement 31, 35 verhindert, wenn das Werkzeugunterteil 22 sich in der Betriebsposition 30 befindet. Dadurch wird auch eine Bewegung des Werkzeugunterteils 22 gegenüber dem Gestellelements 25 verhindert, wenn sich das Werkzeugunterteil 22 in der Betriebsposition 30 befindet.

## Patentansprüche

1. Arbeitsstation (19) für eine Tiefziehverpackungsmaschine (1), umfassend ein Werkzeugoberteil (21),
ein in einer Wechselrichtung (28) aus der Arbeitsstation (19) herausnehmbares Werkzeugunterteil (22),
eine Wechselvorrichtung (29) zum Kippen des Werkzeugunterteils (22) von einer Betriebsposition (30) zu einer Wechselposition (28),
**dadurch gekennzeichnet, dass**
das Werkzeugunterteil (22) auf einem ersten Tragelement (31) der Wechselvorrichtung (29) gelagert ist, wobei das erste Tragelement (31) an der Arbeitsstation (19) um eine erste Kippachse (32) drehbar gelagert ist,
wobei die Wechselvorrichtung (29) einen ersten Nocken (33) aufweist, und wobei die Wechselvorrichtung (29) dazu konfiguriert ist, durch ein Drehen des ersten Nockens (33) um eine von der ersten Kippachse (32) separat angeordnete erste Drehachse (34) das erste Tragelement (31) um die erste Kippachse (32) zu kippen.

2. Arbeitsstation gemäß Anspruch 1, **dadurch gekennzeichnet, dass** durch eine Drehbewegung des ersten Nockens (33) von einer ersten Rastposition (41) zu einer zweiten Rastposition (42) das erste Tragelement (31) von einer ersten Stellung (39) zu einer zweiten Stellung (40) kippbar ist.

3. Arbeitsstation gemäß Anspruch 2, **dadurch gekennzeichnet, dass** das erste Tragelement (31) lediglich mit einer Kippbewegung von der ersten Stellung (39) zu der zweiten Stellung (40) bringbar ist.

4. Arbeitsstation gemäß Anspruch 2 oder 3, **dadurch gekennzeichnet, dass** die erste Kippachse (32) an der Arbeitsstation (19), bevorzugt während der gesamten Drehbewegung des ersten Nockens (33) zwischen der ersten Rastposition (41) und der zweiten Rastposition (42), ortsfest ist.

5. Arbeitsstation gemäß einem der Ansprüche 2 bis 4, **dadurch gekennzeichnet, dass** das erste Tragelement (31) in Zusammenwirkung mit dem ersten Nocken (33) in der ersten Stellung (39) verriegelbar ist, wenn der erste Nocken (33) sich in der ersten Rastposition (41) befindet, und/oder wobei das erste Tragelement (31) in Zusammenwirkung mit dem ersten Nocken (33) in der zweiten Stellung (40) verriegelbar ist, wenn der erste Nocken (33) sich in der zweiten Rastposition (42) befindet.

6. Arbeitsstation gemäß einem der vorangehenden Ansprüche, **dadurch gekennzeichnet, dass** das erste Tragelement (31) einen ersten Hauptkörper (31a) und ein sich von dem ersten Hauptkörper (31a) des ersten Tragelements (31) erstreckendes erstes hakenförmiges Ende (31b) aufweist.

7. Arbeitsstation gemäß Anspruch 6, **dadurch gekennzeichnet, dass** in der ersten Stellung (39) ein erster Abschnitt (33a) des ersten Nockens (33) in einem ersten Aufnahmebereich (31a) des ersten hakenförmigen Endes (31b) des ersten Tragelements (31) aufgenommen ist.

8. Arbeitsstation gemäß Anspruch 6 oder 7, **dadurch gekennzeichnet, dass** in der zweiten Stellung (40) ein zweiter Abschnitt (33b) des ersten Nockens (33) in einer ersten Vertiefung (31d) des ersten Hauptkörpers (31a) des ersten Tragelements (31) aufgenommen ist.

9. Arbeitsstation gemäß einem der Ansprüche 6 bis 8, **dadurch gekennzeichnet, dass** der erste Hauptkörper (31a) einen ersten Führungsteil (31e) aufweist, wobei das Werkzeugunterteil (22) in dem ersten Führungsteil (31e) und/oder auf dem ersten Führungsteil (31e) gleitbar oder rollbar ist.

10. Arbeitsstation gemäß einem der vorangehenden Ansprüche, **dadurch gekennzeichnet, dass** die Wechselvorrichtung (29) zwei Tragelemente (31, 35) aufweist, wobei die Tragelemente (31, 35) jeweils gleich ausgebildet sind und an gegenüberliegenden Seiten (S1, S2) des Werkzeugunterteils (22) symmetrisch zueinander angeordnet sind.

11. Arbeitsstation gemäß einem der vorangehenden Ansprüche, **dadurch gekennzeichnet, dass** die Wechselvorrichtung (29) zwei Nocken (33, 37) aufweist, wobei die Nocken (33, 37) jeweils gleich ausgebildet sind und an gegenüberliegenden Seiten (S1, S2) des Werkzeugunterteils (22) symmetrisch zueinander angeordnet sind.

12. Arbeitsstation gemäß Anspruch 11, **dadurch gekennzeichnet, dass** die zwei Nocken (33, 37) über eine Welle (45) miteinander, vorzugsweise mittels eines Hebels (46) gemeinsam betätigbar, gekoppelt sind.

13. Arbeitsstation gemäß Anspruch 12, **dadurch gekennzeichnet, dass** auf der Welle ein Vorsprung (55) angeordnet ist, wobei der Vorsprung (55) in einer Ausnehmung (47) des Werkzeugunterteils (22) aufgenommen ist, um das Werkzeugunterteil (22) beim Drehen der Welle (45) quer zu der Wechselrichtung (28), bevorzugt in Richtung einer Wellenachse (56) zu schieben.

14. Arbeitsstation gemäß einem der vorangehenden Ansprüche, **dadurch gekennzeichnet, dass** das Werkzeugunterteil (22) eine Aussparung (53) zum Aufnehmen einer Sperreinheit (54) eines Gestellelements (25) aufweist, sodass eine Bewegung des Werkzeugunterteils (22) entlang des ersten Tragelements (31) und/oder des Gestellelements (25) verhindert wird, wenn das Werkzeugunterteil (22) sich in der Betriebsposition (30) befindet.

15. Tiefziehverpackungsmaschine (1) umfassend eine Arbeitsstation (19) gemäß einem der Ansprüche 1 bis 14.

## Claims

1. Workstation (19) for a deep-drawing packaging machine (1), comprising
a tool upper part (21),
a tool lower part (22) which can be removed from the workstation (19) in a change direction (28),
a changing device (29) for tilting the tool lower part (22) from an operating position (30) to a changing position (28),
**characterised in that**
the tool lower part (22) is mounted on a first support element (31) of the changing device (29), wherein the first support element (31) is rotatably mounted on the workstation (19) about a first tilting axis (32),
wherein the changing device (29) comprises a first cam (33), and wherein the changing device (29) is configured to tilt the first support element (31) about the first tilting axis (32) by rotating the first cam (33) about a first rotation axis (34) arranged separately from the first tilting axis (32).

2. Workstation according to claim 1, **characterised in that** the first support element (31) is tiltable from a first position (39) to a second position (40) by a rotary movement of the first cam (33) from a first holding position (41) to a second holding position (42).

3. Workstation according to claim 2, **characterised in that** the first support element (31) can be moved from the first position (39) to the second position (40) by only a tilting movement.

4. Workstation according to claim 2 or 3, **characterised in that** the first tilting axis (32) is fixed at the workstation (19), preferably during the entire rotational movement of the first cam (33) between the first holding position (41) and the second holding position (42).

5. Workstation according to one of claims 2 to 4, **characterised in that** the first support element (31) can be locked in the first position (39) in cooperation with the first cam (33) when the first cam (33) is in the first holding position (41), and/or wherein the first support element (31) can be locked in cooperation with the first cam (33) in the second position (40) when the first cam (33) is in the second holding position (42).

6. Workstation according to one of the preceding claims, **characterised in that** the first support element (31) comprises a first main body (31a) and a first hook-shaped end (31b) extending from the first main body (31a) of the first support element (31).

7. Workstation according to claim 6, **characterised in that** in the first position (39), a first section (33a) of the first cam (33) is received in a first receiving area (31a) of the first hook-shaped end (31b) of the first support element (31).

8. Workstation according to claim 6 or 7, **characterised in that** in the second position (40), a second section (33b) of the first cam (33) is received in a first recess (31d) of the first main body (31a) of the first support element (31).

9. Workstation according to one of claims 6 to 8, **characterised in that** the first main body (31a) comprises a first guide part (31e), wherein the tool lower part (22) is slidable or rollable in the first guide part (31e) and/or on the first guide part (31e).

10. Workstation according to one of the preceding claims, **characterised in that** the changing device (29) comprises two support elements (31, 35), wherein the support elements (31, 35) are each of identical construction and are arranged symmetrically to one another on opposite sides (S1, S2) of the tool lower part (22).

11. Workstation according to one of the preceding claims, **characterised in that** the changing device (29) comprises two cams (33, 37), wherein the cams (33, 37) are each of identical design and are arranged symmetrically to one another on opposite sides (S1, S2) of the tool lower part (22).

12. Workstation according to claim 11, **characterised in that** the two cams (33, 37) are coupled to each other via a shaft (45), preferably jointly actuatable by means of a lever (46).

13. Workstation according to claim 12, **characterised in that** a projection (55) is arranged on the shaft, wherein the projection (55) is received in a recess (47) of the tool lower part (22) in order to push the tool lower part (22) transversely to the direction of change (28), preferably in the direction of a shaft axis (56), when the shaft (45) is rotated.

14. Workstation according to one of the preceding claims, **characterised in that** the tool base (22) comprises a recess (53) for receiving a locking unit (54) of a frame element (25) so that movement of the tool base (22) along the first support element (31) and/or the frame element (25) is prevented when the tool base (22) is in the operating position (30).

15. Deep-drawing packaging machine (1) comprising a workstation (19) according to one of claims 1 to 14.

## Revendications

1. Poste de travail (19) pour une machine d'emballage par emboutissage (1), comprenant
une partie supérieure d'outil (21),
une partie inférieure d'outil (22) pouvant être retirée du poste de travail (19) dans un sens de changement (28),
un dispositif de changement (29) permettant de basculer la partie inférieure de l'outil (22) d'une position de fonctionnement (30) jusqu'à une position de changement (28),
**caractérisé en ce que**
la partie inférieure d'outil (22) est montée sur un premier élément de support (31) du dispositif de changement (29), dans lequel le premier élément de support (31) est monté rotatif au niveau du poste de travail (19) autour d'un premier axe de basculement (32),
dans lequel le dispositif de changement (29) présente une première came (33) et dans lequel le dispositif de changement (29) est configuré pour basculer le premier élément de support (31) autour du premier axe de basculement (32) grâce à une rotation de la première came (33) autour d'un premier axe de rotation (34) agencé séparément du premier axe de basculement (32).

2. Poste de travail selon la revendication 1, **caractérisé en ce que** le premier élément de support (31) peut être basculé d'une première position (39) jusqu'à une deuxième position (40) grâce à un mouvement de rotation de la première came (33) d'une première position d'encliquetage (41) jusqu'à une deuxième position d'encliquetage (42).

3. Poste de travail selon la revendication 2, **caractérisé en ce que** le premier élément de support (31) ne peut être amené de la première position (39) jusqu'à la deuxième position (40) que par un mouvement de basculement.

4. Poste de travail selon la revendication 2 ou 3, **caractérisé en ce que** le premier axe de basculement (32) est fixe en position au niveau du poste de travail (19), de manière préférée pendant tout le mouvement de rotation de la première came (33) entre la première position d'encliquetage (41) et la deuxième position d'encliquetage (42).

5. Poste de travail selon l'une quelconque des revendications 2 à 4, **caractérisé en ce que** le premier élément de support (31) peut être verrouillé dans la première position (39) en coopération avec la première came (33) lorsque la première came (33) se trouve dans la première position d'encliquetage (41), et/ou dans lequel le premier élément de support (31) peut être verrouillé dans la deuxième position (40) en coopération avec la première came (33) lorsque la première came (33) se trouve dans la deuxième position d'encliquetage (42).

6. Poste de travail selon l'une quelconque des revendications précédentes, **caractérisé en ce que** le premier élément de support (31) présente un premier corps principal (31a) et une première extrémité en forme de crochet (31b) s'étendant à partir du premier corps principal (31a) du premier élément de support (31).

7. Poste de travail selon la revendication 6, **caractérisé en ce que,** dans la première position (39), une première section (33a) de la première came (33) est accueillie dans une première région de réception (31a) de la première extrémité en forme de crochet (31b) du premier élément de support (31).

8. Poste de travail selon la revendication 6 ou 7, **caractérisé en ce que,** dans la deuxième position (40), une deuxième section (33b) de la première came (33) est accueillie dans une première dépression (31d) du premier corps principal (31a) du premier élément de support (31).

9. Poste de travail selon l'une quelconque des revendications 6 à 8, **caractérisé en ce que** le premier corps principal (31a) présente une première partie de guidage (31e), dans lequel la partie inférieure d'outil (22) peut coulisser ou rouler dans la première partie de guidage (31e) et/ou sur la première partie de guidage (31e).

10. Poste de travail selon l'une quelconque des revendications précédentes, **caractérisé en ce que** le dispositif de changement (29) présente deux éléments de support (31, 35), dans lequel les éléments de support (31, 35) sont réalisés respectivement de manière identique et sont agencés de manière symétrique l'un par rapport à l'autre sur des côtés opposés (S1, S2) de la partie inférieure d'outil (22).

11. Poste de travail selon l'une quelconque des revendications précédentes, **caractérisé en ce que** le dispositif de changement (29) présente deux cames (33, 37), dans lequel les cames (33, 37) sont réalisées respectivement de manière identique et sont agencées de manière symétrique l'une par rapport à l'autre sur des côtés opposés (S1, S2) de la partie inférieure d'outil (22).

12. Poste de travail selon la revendication 11, **caractérisé en ce que** les deux cames (33, 37) sont couplées l'une à l'autre par l'intermédiaire d'un arbre (45), de manière préférée au moyen d'un levier (46) pouvant être actionné conjointement.

13. Poste de travail selon la revendication 12, **caractérisé en ce qu'une** saillie (55) est agencée sur l'arbre, dans lequel la saillie (55) est accueillie dans un évidement (47) de la partie inférieure d'outil (22) afin de pousser la partie inférieure d'outil (22) transversalement par rapport au sens de changement (28), de manière préférée en direction d'un axe d'arbre (56), lors de la rotation de l'arbre (45).

14. Poste de travail selon l'une quelconque des revendications précédentes, **caractérisé en ce que** la partie inférieure d'outil (22) présente une cavité (53) permettant d'accueillir une unité de verrouillage (54) d'un élément de châssis (25), de sorte qu'un déplacement de la partie inférieure d'outil (22) le long du premier élément de support (31) et/ou le long de l'élément de châssis (25) est empêché lorsque la partie inférieure d'outil (22) est dans la position de fonctionnement (30).

15. Machine d'emballage par emboutissage (1) comprenant un poste de travail (19) selon l'une quelconque des revendications 1 à 14.
